Europäisches Patentamt

European Patent Office

Office européen des brevets

(11) Publication number: **0 542 380 A1**

## EUROPEAN PATENT APPLICATION

(21) Application number: **92203484.8**

(51) Int. Cl.⁵: **C08F 8/46**

(22) Date of filing: **12.11.92**

(30) Priority: **15.11.91 EP 91310579**

(43) Date of publication of application:
**19.05.93 Bulletin 93/20**

(84) Designated Contracting States:
**BE DE ES FR GB IT NL**

(71) Applicant: **SHELL INTERNATIONALE RESEARCH MAATSCHAPPIJ B.V.**
**Carel van Bylandtlaan 30**
**NL– 2596 HR Den Haag(NL)**

(72) Inventor: **Schenk, Cornelis**
**11 Oaks Park**
**Canterbury, Kent CT2 9DP(GB)**

(54) Process for the preparation of polyalkenyl derivatives of unsaturated dicarboxylic acid materials.

(57) The invention provides a process for the preparation of a polyalkenyl derivative of a monoethylenically unsaturated $C_{4-10}$ dicarboxylic acid material wherein the ratio of dicarboxylic acid moieties per polyalkenyl chain is less than 1.2:1, which comprises reacting a polyalkene having $M_n$ in the range 950 to 5000 with a monoethylenically unsaturated $C_{4-10}$ dicarboxylic acid material in mol ratio dicarboxylic acid material: polyalkene greater than 1:1 at a temperature in the range 150 to 260°C in the presence of a polyaddition–inhibiting amount of a sulphonic acid.

This invention relates to processes for the preparation of polyalkenyl derivatives of monoethylenically unsaturated $C_{4-10}$ dicarboxylic acid materials.

Ashless dispersants are important, particularly for incorporation in engine lubricating oil compositions, for keeping engines clean from undesirable deposits. Such dispersants may typically comprise an amine, polyamine, alkanol or polyol attached to a long-chain hydrocarbon polymer (e.g. polyisobutylene) through an acid group (e.g. a dicarboxylic acid group such as a succinic acid group). Such ashless dispersants are described, for example, in US Patent No. 3,172,892, US Patent No. 4,234,435, and EP-A-208 560.

Attachment of the hydrocarbon polymer to the acid group has been achieved by chlorinating polyalkene and reacting the resulting chlorinated polymer with an unsaturated acid or anhydride. Environmental concerns related to chlorine-containing materials make it desirable to avoid the use of chlorine in such syntheses.

An alternative mode of synthesis comprises thermal reaction of a polyalkene directly with the unsaturated acid or anhydride.

In order to minimise potential problems of high viscosity or undesirable interactions between the eventual ashless dispersant product with other additive components in a lubricating composition it is desirable to have as closely as possible only a single unsaturated acid or anhydride moiety reacting on each polyalkene chain.

Prior art processes have not addressed this problem, but have generally been concerned in relation to direct thermal reaction of a polyalkene with unsaturated acid or anhydride with features such as suppression of sediment formation.

For example, US Patent No. 3,819,660 states (column 3 lines 23 to 33) "that the reaction of alkene hydrocarbon with maleic anhydride in general can be accelerated and formation of tarry coke-like material when the reaction involves alkene hydrocarbon of 168-900 M.W. can be suppressed by the use of alkylbenzenesulfonic acid as catalyst. Such catalyst should be soluble either in the alkene hydrocarbon or molten maleic anhydride. But such use of the sulfonic acid catalyst appears to enhance fumaric acid sublimation in some unknown manner. It has also been discovered that the additional use of acetic anhydride suppresses fumaric acid sublimation". The alkylbenzenesulfonic acid is preferable, a $C_{1-3}$ alkyl, benzenesulfonic acid, most especially p-toluenesulfonic acid. In the examples, the molar ratio alkene : maleic anhydride is in the range 1.1-1.2 : 1.0.

US Patent No. 4,086,251 discloses (Column 4 lines 12 to 20) a process wherein "one mole of polymeric alkene having a number average molecular weight from about 200 to about 3000, 0.8 to 10 moles of intramolecular anhydride of mono-unsaturated alkylene dicarboxylic acid and an effective amount, generally, 5 to 200ppm based on polymer, of one or more "tar and side product suppressing additives" are introduced into a reaction zone. These materials are reacted at a temperature from about 150°C to about 300°C to form alkenyl anhydride". Different types of "tar and side product suppressing additives" comprise chlorinated and/or brominated aliphatic hydrocarbons or their halogenated derivatives; chlorine and/or bromine containing derivatives of carboxylic or sulfonic acids, or N-chloro or N-bromine amides or amides of such acids; chlorinated and/or brominated intramolecular anhydrides of aliphatic carboxylic acids; chlorinated and/or brominated aliphatic or aromatic ketones and acetals; 1,3-dibromo-5,5-dialkyl substituted hydantoins; inorganic acids and salts consisting of dry halogen chloride, calcium bromide and iodine monochloride, etc.; and the group consisting of chlorine, bromine and iodine.

US Patent No. 3,855,251 discloses adducts resulting from the addition reaction of maleic anhydride with a butene hydrocarbon polymer having a number average molecular weight in the range of 200 to 900 wherein those adduct entities which are tetrasubstituted with respect to their double bonds comprise at least 50 percent of the total adduct entities. The addition reaction is disclosed as being in the presence of catalytic amounts of alkylbenzene sulfonic acid, preferably a p-alkylbenzene sulfonic acid wherein the alkyl group preferably has 1 to about 40 carbon atoms. The molar ratio butene polymer hydrocarbon : maleic anhydride reactants is disclosed as being 1.1-1.2 : 1.0. In the examples, the alkylbenzene sulfonic acid is p-toluenesulfonic acid.

US Patent No. 4,235,786, corresponding to EP-A-14 288, discloses a process for producing oil-soluble derivatives of a monoethylenically unsaturated $C_{4-10}$ dicarboxylic acid material under conditions of reduced sediment formation. It is stated that the process can be characterised as a process for the preparation of a hydrocarbon-soluble $C_{30-700}$ hydrocarbyl substituted $C_{4-10}$ dicarboxylic acid material, preferably $C_{50-120}$ olefin substituted succinic anhydride, comprising the step of reacting said olefin with said dicarboxylic acid material, for example polyisobutylene with maleic anhydride, in a mole ratio of 0.5 to 3, preferably 1 to 2, of olefin to dicarboxylic acid material in the presence of a sediment-reducing amount, generally from 0.01 to 5 wt%, preferably 0.05 to 2.5 wt%, of an oil-soluble strong organic acid, preferably a $C_{15-70}$ optimally $C_{28-36}$ hydrocarbyl substituted sulfonic acid, said wt% based upon the total weight of the reactants. It is stated (Column 4 lines 51 to 54) that "a sediment − reducing amount of oil − soluble acid has been found to be at least 0.01, preferably 0.05 to 2.5, optionally 0.1 to 1.0, wt% (based on the total weight of reactant charge)".

In Example 1, a polyisobutylene (PIB) of number average molecular weight ($M_n$) 900 was reacted with maleic anhydride in a mol ratio PIB:MALA of 1.03:1 in the presence of about 0.13 wt% of an alkylated benzene sulfonic acid containing an average of about total 30 carbon atoms, whereby the presence of the acid reduced sediment formation by 93% (from 3.0% to 0.2%) relative to the same reaction in the absence of the acid.

In Example 3, PIB's of Mn 900 and 1300 were reacted with MALA in mol ratios PIB:MALA of 1.9:1 and 1.4:1 respectively. Using the PIB of $M_n$ 900, 0.4 wt% of alkylbenzene sulfonic acid containing an average total carbon content of about 30 carbon atoms resulted in 0.2 wt% sediment and 0.2 wt% of the alkylbenzene sulfonic acid resulted in 0.4 wt% sediment, compared with 1.8 wt% sediment obtained in the absence of alkylbenzene sulfonic acid. Using the PIB of $M_n$ 1300, 0.2 wt% of an alkylbenzene sulfonic acid containing an average total carbon content of about 30 carbon atoms resulted in 0.08 wt% sediment and 0.2 wt% of an alkylbenzene sulfonic acid having at least 16 average carbon content per molecule resulted in 0.16 wt% sediment, compared with 1.0 wt% sediment obtained in the absence of alkylbenzene sulfonic acid. Sediment was measured in a test in which 50 ml of heptane and reaction product were placed in a calibrated tube prior to centrifuging at about 1300 rpm for 20 minutes and thereafter measuring the sediment in said calibrated tube.

It has now surprisingly been found possible to prepare a polyalkenyl derivative of a monoethylenically unsaturated $C_{4-10}$ dicarboxylic acid material wherein the ratio of dicarboxylic acid moieties per polyalkenyl chain is reduced, i.e. wherein polyaddition is inhibited, under conditions wherein there is not necessarily any appreciable reduction in sediment.

According to the present invention there is provided a process for the preparation of a polyalkenyl derivative of a monoethylenically unsaturated $C_{4-10}$ dicarboxylic acid material wherein the ratio of dicarboxylic acid moieties per polyalkenyl chain is less than 1.2:1, which comprises reacting a polyalkene having $M_n$ in the range of 950 to 5000 with a monoethylenically unsaturated $C_{4-10}$ dicarboxylic acid material in mol ratio dicarboxylic acid material: polyalkene greater than 1:1 at a temperature in the range 150 to 260°C in the presence of a polyaddition − inhibiting amount of a sulphonic acid.

The polyalkene may conveniently be a homopolymer or copolymer, for example of at least one $C_{2-10}$ mono − olefin. Preferably the polyalkene is a polymer of at least one $C_{2-5}$ monoolefin, e.g. an ethylene − propylene copolymer. The monoolefin is preferably a $C_{3-4}$ olefin and preferred polyalkenes derived therefrom include polyisobutylenes and atactic propylene oligomers. It is preferred in accordance with the invention that the polyalkene is polyisobutylene.

The number average molecular weight, $M_n$, of polyalkenes may be determined by several known techniques which give closely similar results. Thus $M_n$ may be determined for example by modern gel permeation chromatography (GPC), e.g. as described for example in W.W. Yau, J.J. Kirkland and D.D. Bly, "Modern Size Exclusion Liquid Chromatography", John Wiley and Sons, New York, 1979, or by vapour phase osmometry (VPO), or, as in the examples hereinafter, by quantitative reaction with ozone on the assumption that each oligomer chain contains one double bond, as will be readily understood by those skilled in the art.

If old GPC methods are followed, e.g. those described in "Topics in Chemical Instrumentation, Volume XXIX, Gel Permeation Chromatography" by Jack Cazes, published in The Journal of Chemical Education, Volume 43, numbers, 7 and 8, (1966), particularly as specified in US Patent No. 4,234,435, it is likely that values obtained for $M_n$ will be higher than those obtained by the above methods. For example, for materials having $M_n$ in excess of 2,000, the values obtained by these old GPC methods may be 10 to 17% higher than those obtained by the said above methods.

The polyalkenes used in the present invention have $M_n$ in the range 950 to 5000 by the said above methods, and preferably have $M_n$ in the range 950 to 3000, more preferably in the range 950 to 2500.

$C_{4-10}$ dicarboxyl acid materials (see for example US Patents Nos. 4,086,251 and 4,235,786) may for example be anhydrides, e.g. of $C_{4-6}$ dicarboxylic acids such as maleic acid, citraconic acid (methylmaleic acid), itaconic acid (methylene succinic acid) and ethylmaleic acid. The $C_{4-10}$ dicarboxylic acid material is preferably maleic anhydride.

When the $C_{4-10}$ dicarboxylic acid material is maleic anhydride, the polyalkenyl derivative of the process of the invention will be a polyalkenyl succinic acid derivative.

The ratio of dicarboxylic acid moieties per polyalkenyl chain (referred to as "succination ratio" when the dicarboxylic acid material is maleic anhydride), r, may readily be calculated from the following expression:

$$r = \frac{M_n \times AV}{20 \times AM - AV \times M_{DA}}$$

in which:

$M_n$ = Number average molecular weight of the polyalkene

$AV$ = Acid value of the reaction product (meq/g)

$AM$ = Active matter in the reaction product (%w)

$M_{DA}$ = Molecular weight of the dicarboxylic acid material (98 for maleic anhydride)

"Active matter" denotes actual polyalkenyl derivatives of the monoethylenically unsaturated $C_{4-10}$ dicarboxylic acid material, from which it will be understood that unreacted polyalkene does not contribute to the AM.

In processes in accordance with the invention, it has been found possible to obtain values of r below 1.1:1 and even 1.05:1 or lower.

The mol ratio dicarboxylic acid material: polyalkene (i.e. the starting materials used in the process of the invention) is greater than 1:1, e.g. in the range 1.05:1 to 10:1, and is preferably in the range 1.1:1 to 5:1. The mol ratio of dicarboxylic acid material: polyalkene is advantageously in the range 1.25:1 to 4:1. Mol ratios up to 3:1 have been found to be very effective.

The sulphonic acid may be a material such as an alkane sulphonic acid, e.g. a $C_{1-10}$ alkane sulphonic acid such as methane sulphonic acid or ethane sulphonic acid, or an aryl sulphonic acid such as benzene sulphonic acid or alkyl−substituted benzene sulphonic acid. However, the sulphonic acid is preferably an alkaryl sulfonic acid. Alkaryl sulphonic acids may for example bear one or more alkyl groups to a total of about 70 carbon atoms, preferably up to about 30 carbon atoms. Thus, they may be, for example, alkylbenzene, alkyltoluene or alkylxylene sulphonic acids. Preferably the sulphonic acid is a ($C_{1-20}$ alkyl) benzene sulphonic acid, advantageously a ($C_{1-13}$ alkyl) benzene sulphonic acid. Examples of such acids include p−toluene sulphonic acid and the alkylbenzene sulphonic acids sold by member companies of the Royal Dutch/Shell group of companies under the trade mark "DOBANIC", e.g. "DOBANIC" acid 83, "DOBANIC" acid 102, "DOBANIC" acid 103 and "DOBANIC" acid 113. These "DOBANIC" acid materials and their close equivalents, are particularly easily handled materials, enhancing their suitability for use in the process of the invention.

A polyaddition−inhibiting amount of the sulphonic acid is an amount of the sulphonic acid which is sufficient to reduce the ratio r above, relative to a process carried out under identical conditions except for the absence of any sulphonic acid. Thus whilst for example amounts of up to 1%w or more based on the total weight of reactants (i.e. polyalkene and dicarboxylic acid material together) may be used, the sulphonic acid is preferably present in an amount in the range 0.0025 to 0.1%w, more preferably 0.005 to 0.05%w, based on the total weight of reactants. The sulphonic acid may very conveniently be present in an amount less than 0.01%w based on the total weight of reactants.

The temperature of the reaction is in the range 150°C to 260°C, but it is preferably in the range 190°C to 250°C. Temperatures in the range 200 to 235°C have been found to be very effective. Reaction times up to 24 hours may be found to be convenient. The reaction may be effected at atmospheric pressure, or under elevated pressures, e.g. in a closed or pressurised reactor.

Another aspect of the present invention provides the use of at least 0.0025%w based on total reactants of a sulphonic acid for reducing the ratio of dicarboxylic acid moieties per polyalkenyl derivatives of a monoethylenically unsaturated $C_{4-10}$ dicarboxylic acid material by thermal reaction of a polyalkene having $M_n$ in the range 950 to 5000 with a monoolefinically unsaturated $C_{4-10}$ dicarboxylic acid material.

The present invention will further understood from the following illustrative examples, in which the molecular weights, $M_n$, of polyisobutylene samples were, unless otherwise indicated, determined by quantitative reaction with ozone, on the assumption that each oligomer chain contains one double bond, as will be readily understood by those skilled in the art.

EXAMPLE 1

Commercially available polyisobutylene (PIB) of molecular weight ($M_n$) 980 ("ULTRAVIS 10" (trade mark), ex BP) (666.3g, 0.68 mol) and maleic anhydride (MALA) (87.5g, 0.87 mol) (MALA:PIB mol ratio 1.28:1) were heated together in the presence of 0.75g, (0.1%w based on total weight of reactant charge) of

a ($C_{10-13}$ alkyl) benzene sulphonic acid ("DOBANIC" acid 103 (trade mark), available from member companies of the Royal Dutch/Shell group of companies) at reflux temperature (200°C) in a glass reactor equipped with baffles, turbine stirrer, reflux condenser, nitrogen inlet, temperature probe and electrical heating mantle, for 24 hours. Unreacted MALA was removed by vacuum distillation. The residue was then allowed to cool to ambient temperature (20°C), diluted with heptane to about 50%w, and insoluble matter was removed by filtration and weighed. The heptane was then evaporated off, yielding a clear, dark yellow viscous liquid product which was found to have active matter content of 78.4%w and acid value 1.47 milli-equivalents/g (meq/g). This analysis data indicates a succination ratio of 1.0 mol MALA/mol PIB. The insoluble matter removed by filtration was 0.7%w of reaction product, after removal of unreacted MALA.

Active matter content was determined by separating inactive material from the desired active matter on an aluminium oxide column using diethyl ether as eluant. Acid value was determined in accordance with ASTM D 94-85.

Comparative Example A

The procedure of Example 1 was repeated using 783.2g (0.8 mol) "ULTRAVIS 10" PIB and 100.9g (1.03 mol) MALA (MALA:PIB mol ratio 1.29:1), but no sulphonic acid. The resulting product after 24 hours reaction was found to have active matter content 71.2% and acid value 1.67 meq/g, indicating succination ratio 1.3 mol MALA/mol PIB. Insoluble material removed by filtration was 1.1%w of reaction product, after removal of unreacted MALA.

EXAMPLE 2

The procedure of Example 1 was repeated using 630.2g (0.64 mol) "ULTRAVIS 1O" PIB and 187.1g (1.91 mol) MALA (MALA:PIB mol ratio 3:1), in the presence of 0.82g (0.1%w based on total weight of reactant charge) of the ($C_{10-13}$ alkyl) benzene sulphonic acid. The resulting product after 24 hours reaction was found to have active matter content of 83%w and acid value 1.6 meq/g, indicating succination ratio of 1.05 mol MALA/mol PIB. Insoluble material removed by filtration was in excess of 6%w of reaction product, after removal of unreacted MALA.

Comparative Example B

The procedure of Example 2 was repeated using 675.5g (0.69 mol) "ULTRAVIS 10" PIB and 202.6g (2.07 mol) MALA (MALA:PIB mol ratio 3:1), but no sulphonic acid. The resulting product after 24 hours reaction was found to have active matter content 90%w and acid value 2.77 meq/g, indicating succination ratio of 1.75 mol MALA/mol PIB. Insoluble material removed by filtration was 2.2%w of reaction production, after removal of unreacted MALA.

EXAMPLE 3

A 4.5 l autoclave equipped with an overhead venting system was charged with commercially available polyisobutylene of molecular weight ($M_n$) 2380 ("HYVIS 120" (trade mark), ex BP) (2682g, 1.13 mol), maleic anhydride (331g, 3.38 mol) (MALA:PIB mol ratio 3:1) and a ($C_{10-12}$ alkyl) benzene sulphonic acid ("DOBANIC" acid 102 (trade mark), available from member companies of the Royal Dutch/Shell group of companies) (0.24g, 80ppmw, 0.008%w based on total weight of reactant charge). The resulting mixture was heated over 2 hours to 235°C and was then maintained at 235°C for 8 hours. A constant pressure of 2 x $10^5$ Pa was maintained during the reaction by means of the overhead venting system. Unreacted MALA was subsequently removed by distillation at 130°C and a pressure of 60 Pa for 4 hours. The residue was allowed to cool to ambient temperature (20°C), and, after removal of a sample for quantitative assessment of insoluble matter, was diluted twice its volume of heptane, and insoluble matter was filtered off using "CELITE 512" (trade mark) diatomaceous earth filtration aid.

The resulting product after evaporation of the heptane was found to have active matter content of 81.9%w and acid value 0.65 meq/g, indicating succination ratio of 0.98 mol MALA/mol PIB.

Quantitative assessment of insoluble matter was made both by weight and by volume. In the assessment by weight, a sample of the residue was diluted with an equal volume of heptane, filtered (using a 45 micron "MILLIPORE" (trade mark) filter paper). The filter paper was dried to constant weight, and the insoluble material was found to be 3.3%w of the residue.

For assessment by volume attempts were made to follow as closely as possible the method outlined in Example 1 of EP‒B‒14288. Thus a solution of 50ml of residue and 50ml of heptane was placed in a calibrated 100ml tube and centrifuged (Vol.(a)). Due to the viscous nature of the product, complete settlement of the sediment took 18 hours at 2,300 r.p.m. The resulting volume assessment was 2.3% sediment in the tube.

The volume assessment was repeated (Vol. (b)) using a solution of 25ml of residue and 75ml of heptane, which had lower viscosity and only required 30 minutes at 2,300 r.p.m. to achieve complete settlement. The resulting volume assessment was 0.8% sediment in the tube.

EXAMPLES 4 and 5

The procedure of Example 3 was followed (MALA:PIB mol ratio 3:1) using respectively 50ppmw (0.005%w based on total weight of reactant charge), 500ppmw (0.05%w) and no "DOBANIC" acid 102 (Comparative Example C). Results are given in Table 1 following.

### Table 1

| Example | "DOBANIC" acid 102 ppmw (%) | Active Matter (%w) | Product Acid Value (meq/g) | Succination Ratio (mol MALA:mol PIB) | Insoluble matter (%) | | |
|---|---|---|---|---|---|---|---|
| | | | | | %w | Vol(a)% | Vol(b)% |
| 4 | 50 (0.005%) | 80.4 | 0.66 | 1.02 | 3.5 | 2.1 | 0.7 |
| 3 | 80 (0.008%) | 81.9 | 0.65 | 0.98 | 3.3 | 2.3 | 0.8 |
| 5 | 500 (0.05%) | 77.0 | 0.61 | 0.98 | 4.9 | N.D. | N.D. |
| Comp. C | 0 | 68.6 | 0.63 | 1.14 | 3.7 | 2.3 | 0.8 |

N.D. = not done

It will be noted that under the reaction conditions employed (MALA:PIB mol ratio in the reactants 3:1) the succination ratio was significantly reduced in the presence of "DOBANIC" acid relative to Comparative Example C, whilst no appreciable difference in amount of insoluble matter in the reaction product was observed.

EXAMPLE 6

A 0.5 l autoclave was charged with "HYVIS 120" PIB (278g, 0.12 mol), MALA (35g, 0.36 mol) (MALA:PIB mol ratio 3:1) and "DOBANIC" acid 102 (0.05g, 200 ppmw, 0.02% based on total weight of reactant charge). The resulting mixture was heated over 2 hours to 235°C and was then maintained at 235°C for 8 hours. The pressure in the autoclave rose steadily throughout this time. Unreacted MALA was subsequently removed by distillation at 130°C and a pressure of 60 Pa for 4 hours. Insoluble matter was removed from the residue as in Example 3, and quantitative assessment of insoluble matter was made by weight as in Example 3.

The resulting product was found to have active matter content of 79.2%w and acid value of 0.62 meq/g, indicating succination ratio of 0.97 mol MALA/mol PIB. Insoluble matter was found to be 3.7%w of the residue.

EXAMPLES 7 and 8

The procedure of Example 6 was followed (MALA:PIB mol ratio 3:1) using respectively 50ppmw (0.005%w based on total weight of reactant charge), 80 ppmw (0.008%w), and no "DOBANIC" acid 102 (Comparative Example D. Results are given in Table 2 following.

Table 2

| Example | "DOBANIC" acid 102 ppmw (%) | Active Matter (%w) | Product Acid Value (meq/g) | Succination Ratio (mol MALA:mol PIB) | Insoluble Matter (%w) |
|---|---|---|---|---|---|
| 7 | 50 (0.005%) | 77.2 | 0.63 | 1.01 | 2.9 |
| 8 | 80 (0.008%) | 78.5 | 0.61 | 0.96 | 4.5 |
| 9 | 200 (0.02%) | 79.2 | 0.62 | 0.97 | 3.7 |
| Comp. D | 0 | 72.2 | 0.63 | 1.08 | 3.3 |

It will be noted that the results in Table 2 are entirely consistent with those of Table 1.

9

EXAMPLE 9

The procedure of Example 3 was followed with the exception that in place of "DOBANIC" acid 102 there was used para-toluene sulphonic acid (PTSA) in an amount of 225 ppmw (0.0225%w) based on total weight of reactant charge. The resulting product was found to have active matter content of 66.3%w and acid value 0.50 meq/g, indicating a succination ratio of 1.06 mol MALA/mol PIB.

**Claims**

1.  A process for the preparation of a polyalkenyl derivative of a monoethylenically unsaturated $C_{4-10}$ dicarboxylic acid material wherein the ratio of dicarboxylic acid moieties per polyalkenyl chain is less than 1.2:1, which comprises reacting a polyalkene having $M_n$ in the range 950 to 5000 with a monoethylenically unsaturated $C_{4-10}$ dicarboxylic acid material in mol ratio dicarboxylic acid material: polyalkene greater than 1:1 at a temperature in the range 150 to 260°C in the presence of a polyaddition-inhibiting amount of a sulphonic acid.

2.  A process according to Claim 1 wherein the polyalkene is a polymer of at least one $C_{2-5}$ monoolefin.

3.  A process according to Claim 2 wherein the polyalkene is polyisobutylene.

4.  A process according to any one of Claims 1 to 3 wherein the $C_{4-10}$ dicarboxylic acid material is maleic anhydride.

5.  A process according to any one of Claims 1 to 4 wherein the sulphonic acid is a ($C_{1-20}$ alkyl) benzene sulphonic acid.

6.  A process according to Claim 5 wherein the sulphonic acid is a ($C_{1-13}$ alkyl) benzene sulphonic acid.

7.  A process according to any one of claims 1 to 6 wherein the sulphonic acid is present in an amount in the range 0.0025 to 0.1%w based on the total weight of reactants.

8.  A process according to Claim 7 wherein the sulphonic acid is present in an amount in the range 0.005 to 0.05%w based on the total weight of reactants.

9.  A process according to any one of Claims 1 to 8 wherein the mol ratio of dicarboxylic acid material: polyalkene is in the range 1.25:1 to 4:1.

10. The use of at least 0.0025%w based on total reactants of a sulphonic acid for reducing the ratio of dicarboxylic acid moieties per polyalkenyl chain in the preparation of polyalkenyl derivatives of a monoethylenically unsaturated $C_{4-10}$ dicarboxylic acid material by thermal reaction of a polyalkene having $M_n$ in the range 950 to 5000 with a monoolefinically unsaturated $C_{4-10}$ dicarboxylic acid material.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-0 014 288 (EXXON)<br>* the whole document *<br>--- | 1-10 | C08F8/46 |
| A | EP-A-0 217 618 (EXXON)<br>* claims 1-20 *<br>--- | 1 | |
| A | US-A-4 008 168 (I. PUSKAS)<br>* claim 1 * | 1 | |
| | ----- | | |

TECHNICAL FIELDS
SEARCHED (Int. Cl.5 )

C08F

The present search report has been drawn up for all claims

| Place of search | Date of completion of the search | Examiner |
|---|---|---|
| THE HAGUE | 26 FEBRUARY 1993 | PERMENTIER W.A. |

EPO FORM 1503 03.82 (P0401)